(19) Europäisches Patentamt
European Patent Office
Office européen des brevets

(11) **EP 0 606 601 B1**

(12) **EUROPÄISCHE PATENTSCHRIFT**

(45) Veröffentlichungstag und Bekanntmachung des Hinweises auf die Patenterteilung:
**21.08.1996 Patentblatt 1996/34**

(51) Int Cl.6: **H02M 7/5387**, H02M 1/00

(21) Anmeldenummer: **93120214.7**

(22) Anmeldetag: **15.12.1993**

(54) **Ansteuereinrichtung**

Control device

Dispositif de commande

(84) Benannte Vertragsstaaten:
**AT BE CH DE DK ES FR GB GR IT LI NL PT**

(30) Priorität: **15.01.1993 DE 4300981**

(43) Veröffentlichungstag der Anmeldung:
**20.07.1994 Patentblatt 1994/29**

(73) Patentinhaber: **SIEMENS AKTIENGESELLSCHAFT**
**80333 München (DE)**

(72) Erfinder: **Viertler, Tainer**
**D-85551 Kirchheim (DE)**

(56) Entgegenhaltungen:
**US-A- 5 055 762**

- **ELEKTRONIK INDUSTRIE, 7 Juli 1992, Hüthig; A. Meckel: "Drehstrommotor-Steuerung mit dem M 37704"**

## Beschreibung

Die Erfindung bezieht sich auf eine Ansteuereinrichtung gemäß dem Oberbegriff des Anspruchs 1.

Derartige Ansteuereinrichtungen werden in Wechselrichtern und Umrichtern verwendet. Wechselrichter dienen zur Umwandlung einer vorgegebenen Gleichspannung in eine bestimmte Wechselspannung bestimmter Frequenz. Umrichter wandeln eine Wechselspannung mit einem gegebenen Spannungswert und einer gegebenen Frequenz in eine andere Wechselspannung mit evtl. einer anderen Frequenz um, oder eine einphasige Wechselspannung in eine beispielsweise dreiphasige Wechselspannung. Bekannte Wechselrichter oder Umrichter weisen neben der Leistungselektronik (Gegentakt-Halbbrücke oder Gegentakt-Vollbrücke) einen Pulsweiten-Modulator bzw. einen dafür ausgebildeten Mikroprozessor bzw. Mikrocontroller auf. Ansteuereinrichtungen hierfür bzw. Schaltungsanordnungen und Bausteine sind in der Literatur vielfach beschrieben, beispielsweise in "Anwendungsbeispiele, Siemens AG., Bereich Bauelemente (Bestell-Nr. BI-B3536)", oder "Electronic Industrie 7 - 1992: Drehstrommotor-Steuerung mit dem M 37704 (Mikrocontroller von Mitsubishi)". In der Elektronik 1/1991 ist ein anwendungsspezifischer 16-Bit-Motor-Controller beschrieben, der speziell zum Steuern von 3-Phasen-Motoren und bürstenlosen Gleichstrommotoren entwickelt wurde. Dieser Mikrocontroller ist sehr teuer und für einen Wechselrichter, beispielsweise für nur eine Phase, überdimensioniert.

Bei einem Wechselrichter soll der am Verbraucher (Motor, Wandler) anstehende Wechselspannungswert möglichst nahe an den Spannungswert der Gleichspannung bzw. der Zwischenkreisspannung kommen. Das bedeutet, daß das während einer Periode sich verändernde Taktverhältnis einmal eine hundertprozentige Modulation für die obere Halbwelle und einmal eine nullprozentige Modulation für eine untere Halbwelle aufweisen soll, d.h., daß der Um- oder Wechselrichter im Vollblock gefahren werden soll.

In der modernen Leistungselektronik werden ab einer bestimmten Leistung Leistungshalbleiter in einer Gegentakt-Endstufenkonfiguration betrieben. Je nach Typ des Leistungshalbleisters benötigen die Leistungshalbleiter unterschiedlich lange Schutzzeiten, die von dem jeweiligen Typ des Leistungshalbleiters (Bipolar, Mosfet, IG BT, MCT...) und deren Betrieb abhängen. Diese Schutzzeiten verhindern ein kurzzeitiges Überlappen der Leistungshalbleiter im Schaltbetrieb und deren pulsartigen Belastungen bzw. Zerstörung. Speicher- und Verzögerungszeiten der Leistungshalbleiter sind auch stark temperaturabhängig, d.h., die Schutzzeiten, in denen keiner der beiden Leistungshalbleiter angesteuert sein darf, steigen üblicherweise mit größerwerdender Temperatur. Ebenso weisen die Ansteuerung und die Potentialtrennung zur übergeordneten Steuerung Speicher- und Verzögerungszeiten auf. Daher werden die Leistungshalbleiter mit verkürzten Ansteuerungsimpulsen angesteuert. Die Ausgangsimpulse des Modulators werden mit einer programmierbaren Totzeit verzögert, so daß die Leistungshalbleiter keine Schaltüberlappung aufweisen. Für eine optimale Ausnützung der Leistungshalbleiter muß die Schutzzeit bzw. Totzeit so klein wie möglich sein, sie sollte jedoch auch unter Worst-Case-Bedingungen den Leistungshalbleiter nicht überlasten.

Aufgabe der Erfindung ist es daher, den Wirkungsgrad bei einer Ansteuereinrichtung für eine Gegentaktstufe zu erhöhen, d.h. diese auch im Vollblock betreiben zu können.

Diese Aufgabe wird erfindungsgemäß mit einer Ansteuereinrichtung, wie sie eingangs beschrieben ist, mit den Merkmalen gemäß des Anspruchs 1 gelöst.

Erfindungsgemäß sind drei Pulsweitenmodulatoren vorgesehen, die zweckmäßigerweise im Mikrocontroller integriert sind, so daß drei Pulsweitenmodulationsausgänge vorhanden sind. Der erste Pulsweitenmodulationsausgang liefert das eigentliche Modulationssignal, der zweite das Modulationssignal plus der Totzeit, der dritte nur die Totzeit. Durch Kombination der letztgenannten beiden Modulationsausgangssignale ergibt sich ein neues Modulationssignal, welches eines der Ansteuersignale für den Gegentakt-Leistungsschalter darstellt. Das eigentliche Modulationssignal, das am ersten Modulationsausgang ansteht, bildet das andere Ansteuerungssignal für den anderen Gegentaktleistungsschalter. Durch entsprechende Programmierung des Mikrocontrollers können die drei Modulationssignale so kombiniert werden, daß der Modulationsbereich von 0 % bis 100 % durchlaufen werden kann.

Ist im Grenzbereich der Modulation (Modulation geht gegen 0 % oder 100 %) einer der beiden Leistungshalbleiter bei einer Halbbrücke dauernd abgeschaltet, so darf in vorteilhafter Weise die Totzeit gegen Null gehen. Auf diese Weise kann der andere Leistungshalbleiter dauernd eingeschaltet sein (Vollblock) und die Schaltverluste in den Leistungshalbleitern und in den pheripheren Einrichtungen fallen zu diesem Zeitpunkt weg.

Ein weiterer Vorteil ist die volle Ausnutzung der Spannungszeitfläche. Mit ihr ist beispielsweise ein Betrieb eines bürstenlosen Gleichstrommotors an der Spannungsgrenzkennlinie möglich.

Bei einer geforderten Leistung kann so der Strom durch den Leistungshalbleiter einen geringeren Wert annehmen, der Wirkungsgrad ist unter Ausnutzung der Vollblockmodulation am höchsten. Hierzu kommt noch, daß die Modulationsgrenzen gleichweit vom Modulationsmittelpunkt (bei 50 %) entfernt sind, was eine symmetrische Ansteuerung bedeutet. Bei einer induktiven Last kann somit nicht ohne weiteres eine einseitige Aufmagnetisierung vorkommen.

Das zum Mikrocontroller zurückgeführte Modulationssignal teilt der im Mikrocontroller ablaufenden Software mit, wann die Pulsweiten-Modulationsausgabe erfolgt ist, so daß der Mikrocontroller sich bis zum Start der nächsten Periode anderen Aufgaben zuwenden kann.

In einer Weiterbildung der Erfindung wird ab einem bestimmten Modulationsgrenzwert vom Mikrocontroller regelmäßig ein sehr kurzer Impuls erzeugt und an einem vierten Ausgang (Port) des Mikrocontrollers abgegeben. Dieser kurze Impuls, als Power-Bit bezeichnet, wird über ein Gatter mit den Ausgangssignalen des zweiten Ports logisch verknüpft und dem unteren Leistungsschalter zugeführt. Dies ist besonders vorteilhaft bei Mikrocontrollern, die kein hundertprozentiges Modulationssignal ausgeben können. Mit dieser Schaltungsmaßnahme wird erreicht, daß eine fast Vollblockmodulation zur Vollblockmodulation verändert werden kann.

Wird mit der erfindungsgemäßen Ansteuereinrichtung beispielsweise eine Wechselspannung von 50 Hz erzeugt, so kann zweckmäßigerweise das Power-Bit im 100 Hz-Takt gesetzt werden.

Wenn beispielsweise die Anstiegsflanken der Modulationsausgangssignale am Ausgang 1 und am Ausgang 2 des Mikrocontrollers nicht gleichzeitig anstehen, kann in einer zweckmäßigen Ausgestaltung der Erfindung beispielsweise am ersten Modulationsausgang eine Verzögerungseinrichtung angeordnet sein. Diese unterdrückt dann einen unerwünschten Nadelimpuls. Diese Verzögerungseinrichtung kann von einem Kondensator oder einem Inverter gebildet sein. Damit werden störende, sehr kurze Querströme in der Gegentaktstufe vermieden.

Üblicherweise werden die benötigten Modulationswerte in einer Wertetabelle hinterlegt, die im Speicher des Mikrocontrollers vorgesehen sein kann. Es ist aber auch möglich, daß im Mikrocontroller selbst die benötigten Modulationswerte im Real-Time-Betrieb berechnet werden. Dabei kann die Totzeit im on-line-Betrieb in Real-Time veränderbar sein, wobei die Grenzen nur im Modulationsbereich des Mikroprozessors oder des Mikrocontrollers oder des Pulsweitenmodulators selbst liegen. Dies hat auch den Vorteil, daß diese veränderbare Totzeit in Abhängigkeit von Parametern der Halbleiterschalter ermittelt werden kann, wobei interne Einflüsse (Berechnung oder Tabellen der Modulationswerte) und externe Einflüsse (Strom-Spannungs-Durchgang) berücksichtigt werden können.

Die eingangs erwähnte Verknüpfung der drei Pulsweitenmodulationssignale kann entweder extern mit Verknüpfungsgliedern oder intern im Mikrocontroller selbst erfolgen, wobei der dafür ausgelegte Mikrocontroller mit der entsprechenden Software versorgt wird.

Mit der erfindungsgemäßen Ansteuereinrichtung ist die Generierung eines volldigitalen Pulsweitenmmodulationssignals mit symmetrischer Totzeit ohne Modulationsbreitenbegrenzung (Vollblock) möglich. Dabei kann ganz allgemein auf geeignete Mikroprozessoren oder Mikrocontroller zurückgegriffen werden. Es muß nicht unbedingt ein spezieller Mikrocontroller verwendet werden, wie beispielsweise der Intel 80 C 196 KC.

Im folgenden wird die Erfindung anhand der Zeichnung kurz erläutert. Dabei zeigen

Fig. 1 bis 4 Impulsdiagramme und
Fig. 5 und 6 schematisch prinzipielle Schaltungsanordnungen der erfindungsgemäßen Ansteuereinrichtung.

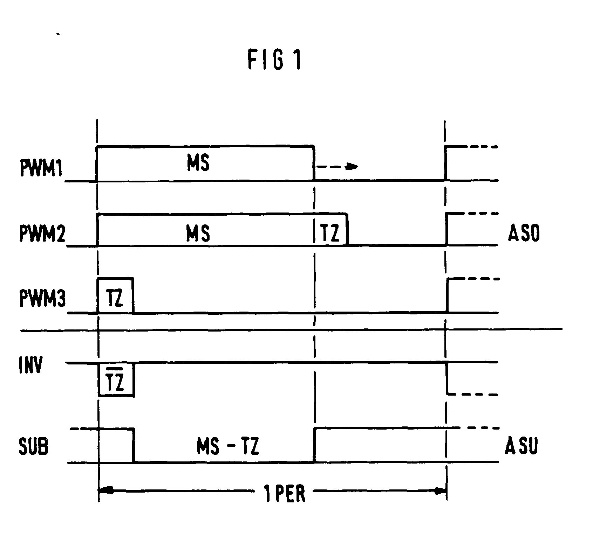

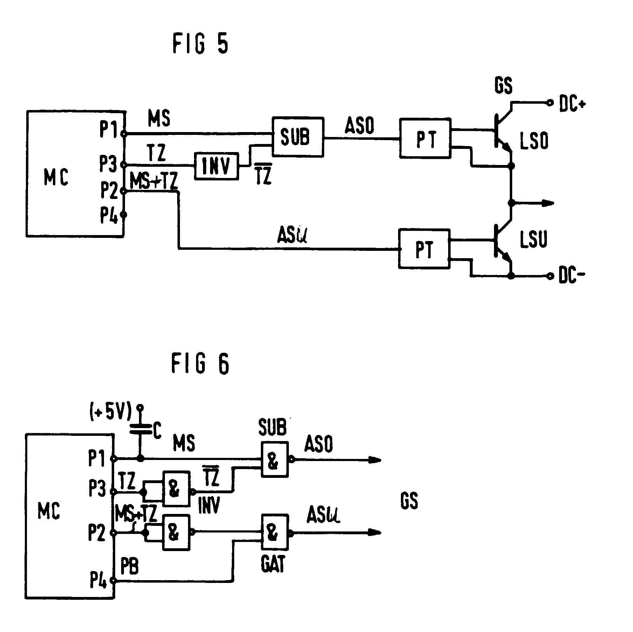

In Fig. 1 wird anhand der Diagramme die Funktion der erfindungsgemäßen Ansteuereinrichtung gezeigt. Am Ausgang P1 des Mikrocontrollers MC wird als eigentliches Modulationssignal MS ein Pulsweiten-Modulationssignal PWM1 ausgegeben. Am Ausgang P2 des Mikrocontrollers MC wird als Pulsweiten-Modulationssignal PWM2 das Modulationssignal MS plus die Totzeit TZ ausgegeben und dieses Signal als Aussteuerungssignal ASO dem oberen Leistungsschalter LSO zugeführt (siehe Fig.5), welches im Falle einer low-aktiven Ansteuerung mit dem Nullpegel den Leistungsschalter LSO durchschaltet. Am Ausgang P3 wird erfindungsgemäß als Pulsweiten-Modulationssignal PWM3 die Totzeit TZ abgegeben, die in einer nachgeschalteten Inverterstufe INV die Totzeit invertiert, so daß sie als invertierte Totzeit $\overline{TZ}$ zur Weiterverarbeitung zur Verfügung steht. Wie aus Fig. 5 ersichtlich ist, wird die invertierte Totzeit $\overline{TZ}$ vom Modulationssignal MS in einer Subtraktionsvorrichtung SUB subtrahiert und als Ansteuerungssignal ASO für den oberen Leistungsschalter LSO, in diesem Ausführungsbeispiel über eine Potentialtrennung PT, dem Leistungsschalter LSO zugeführt. Während aufgrund des Low-Pegels des oberen Ansteuerungssignals ASO der obere Halbleiter LSO eingeschaltet ist, ist mit der entsprechenden Totzeit, und zwar zweimal, der untere Halbleiter LSU mit dem Highpegel ausgeschaltet. Dies ist die an sich bekannte Wirkungsweise der Ansteuerung für eine Leistungshalbbrücke.

Gelangt eines der beiden Signale ASO bzw. ASU in den Grenzbereich von einer Periode minus zweimal die Totzeit, so verschwindet das jeweils andere Ansteuerungssignal ganz und die Totzeit kann jetzt gegen Null gefahren werden. Die Geschwindigkeit, mit der die Totzeit jetzt gegen Null gefahren werden darf, sollte nur halb so groß sein, da die Totzeit zweimal in einer Periode vorhanden ist und die Modulationskennlinie linear sein sollte.

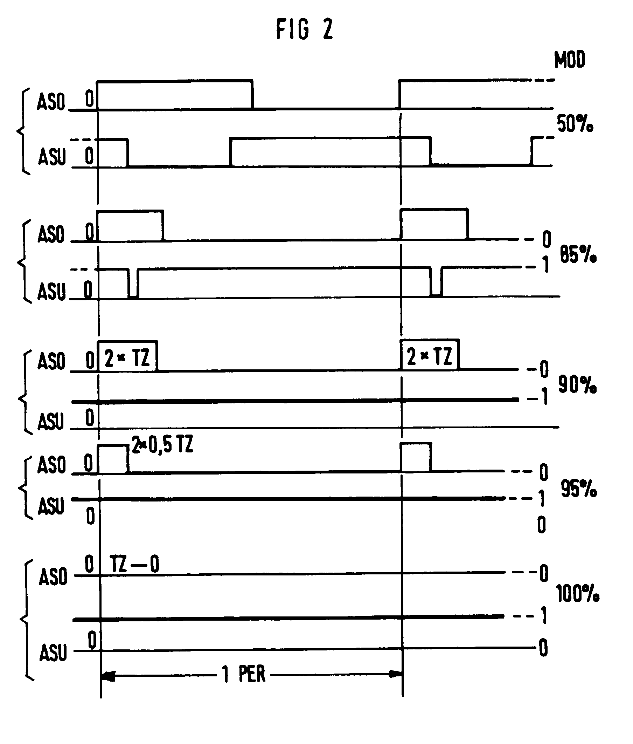

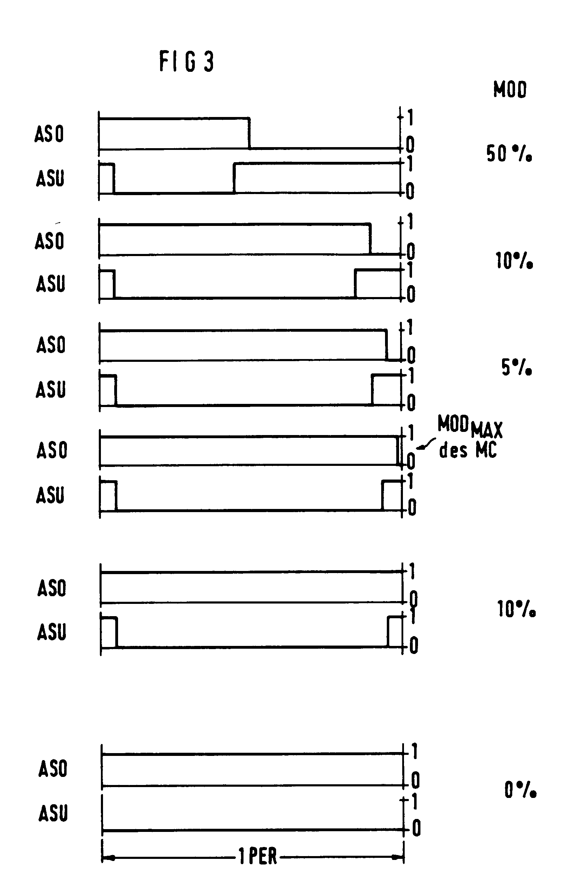

In Fig. 2 ist anhand von Pulsdiagrammen für die beiden Ansteuerungssignale, nämlich ASO und ASU, mit zunehmender Modulation MOD bei beispielsweise 50, 85, 90, 95 und 100 % veranschaulicht, wie die erfindungsgemäße Ansteuereinrichtung funktioniert. Mit zunehmender Modulation ist mit dem oberen Ansteuerungssignal ASO der obere Leistungsschalter LSO immer länger eingeschaltet. Entsprechend dazu, ist aufgrund des unteren Ansteuerungssignals ASU der untere Leistungsschalter LSU immer noch länger ausgeschaltet, bis beispielsweise bei einer Modulation von 90 % das Highsignal des oberen Ansteuerungssignals ASO nur noch zweimal der Totzeit (2 x TZ) entspricht. Das untere Ansteuerungssignal kann jetzt problemlos gegen Null gehen. Ab diesem Zeitpunkt ist also das untere Ansteuerungssignal ASU innerhalb einer Periode PER nur noch auf dem Highpegel, so daß der untere Leistungsschalter LSU dann ausgeschaltet ist. Schrumpft das obere Ansteuerungssignal ASO auf noch weniger als zweimal der halben Totzeit zusammen, so bleibt der andere Leistungsschalter weiterhin dauernd ausgeschaltet, der obere Leistungsschalter ist jedoch noch nicht für die volle Periode eingeschaltet, z. B. bei einer Modulation von 95 %. Dies kann man aufgrund der variablen Totzeit, die gegen Null geht, erreichen, so daß dann, d.h. ab einem bestimmten Modulationsgrenzwert, auch der obere Leistungsschalter dann ausgeschaltet ist und damit eine 100%ige Modulation (MOD: 100 %) erreicht ist. Entsprechendes gilt auch, wenn die Modulation gegen Null geht, beispielsweise ab einem Modulationsgrenzwert von kleiner als 5 %, siehe dazu Fig. 3 die oberen drei Diagramme.

Auf diesem Weg ist es möglich, eine symmetrische Modulation mit den Grenzen 0 % und 100 % für beide Leistungshalbleiter zu erzeugen.

Manche Prozessoren bzw. Mikrocontroller sind nicht in der Lage, eine 100%ige Modulation auszugeben, ihre Grenzen liegen z.B. bei einem 80 -C 196 KC von der Firma Intel bei 99,6 %. Eine Verringerung der Totzeiten würde hier zu einem kurzzeitigem Brückenkurzschluß führen, ein "Streß" der Leistungshalbleiter wäre hier vorprogrammiert. Als Lösung wird in Weiterbildung der Erfindung in diesem Fall von einem weiteren Ausgang (P4) des Mikroprozessors bzw.

Mikrocontrollers MC ein Bit, ein sogenannter Power-Bit PB gesetzt, das den Sprung von 99,6 % auf 100 % Modulation (Vollblock) ermöglicht. Ein zeitlicher Fehler von nur 0,4 % der Periodenzeit liegt im Bereich unterschiedlicher Speicherzeiten verschiedener Leistungshalbleiter und fällt nicht weiter auf. Außerdem kann ein übergeordneter Regler sowieso nicht mehr als 100 % Modulation ausgeben, auch wenn der berechnete Wert dies erfordern würde. Der sehr kleine Fehler liegt also sehr nahe an einem Kennlinienknick. Ein Rechenbeispiel kann dies belegen. Die Taktfrequenz einer Leistungshalbbrücke beträgt 10 KHz, die daraus sich ergebende Periodenzeit beträgt 100 ms.

Ein Fehler von 0,4 % entspricht 400 ns und somit üblicherweise kleiner als eine Totzeit oder im Bereich der Trift von rise, fall oder delay-time mit steigender Temperatur.

In Fig. 3 sind in der unteren Hälfte drei weitere Pulsdiagramme dargestellt. Dabei kann das obere Ansteuerungssignal ASO keinen maximalen Modulationswert (MOD$_{max}$), in diesem Fall z.B. 0,2 %, erreichen, wie oben erläutert. Das deshalb gesetzte Power-Bit bei beispielsweise einen Modulationswert von ca 10 % ermöglicht dann, daß das obere Ansteuerungssignal ASO Highpegel hat und der obere Leistungshalbleiterschalter LSO ausgeschaltet ist. Somit kann die Totzeit verringert werden und das untere Ansteuerungssignal ASU dauernd Nullpegel haben und der untere Leistungshalbleiterschalter LSU durchgeschaltet sein.

In der Theorie geben die Prozessoren bzw. Mikrocontroller zu Beginn einer Periode die Modulationswerte gleichzeitig aus, in der Praxis jedoch sind häufig unterschiedliche Startzeiten möglich, beispielsweise im Bereich von 10 bis 40 ns. Damit keine störenden "Querstromimpulse" in der Gegentaktstufe auftreten können, wird in einer erfindungsgemäßen Weiterbildung eines der Modulationssignale extern verzögert. Eine zu große Verzögerung spielt hier in diesem Fall keine Rolle, da dieser "Fehler" sich nur zur Totzeit hinzuaddiert, wobei dieser Anteil sehr gering ist. Systematische Fehler in Nanosekundenbereich können vom Regler problemlos ausgebessert werden.

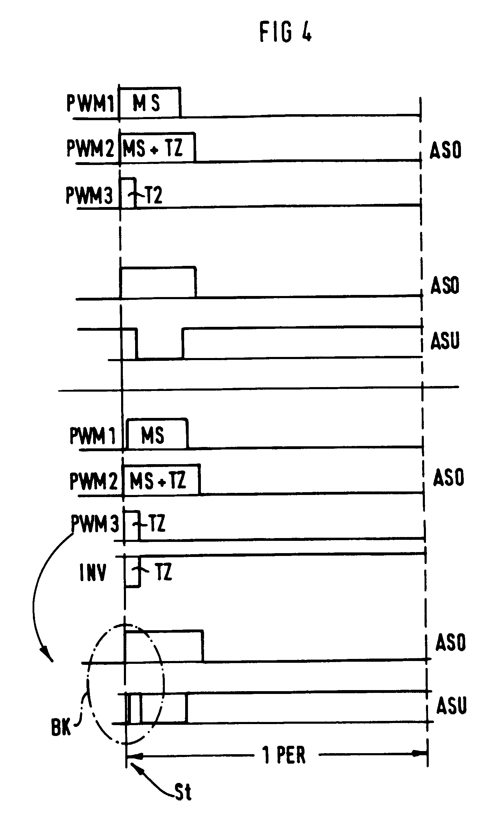

In Fig. 4 sind im oberen Drittel nochmals die drei Modulationssignale bzw. die sich daraus ergebenden Ansteuerungssignale ASO und ASU bei gleichzeitigem Start dargestellt. Sind jedoch die Pulsweitenmodulationssignale PWM1,2,3 nicht exakt synchron, z.B. das Pulsweitenmodulationssignal PWM1 (MS) kommt später, so startet (St) die Anstiegsflanke des unteren Ansteuerungssignals ASU gegenüber dem oberen Ansteuerungssignal ASO etwas später, was bei den Halbleiterschaltern der Gegentaktstufe zu einem kurzzeitigen Brückenkurzschluß BK im Nanosekundenbereich führt. Erfindungsgemäß wird dies mit einem Kondensator C (Fig.6) am Modulationsausgang P1 des Mikrocontrollers MC vermieden. Es kann auch eine andere Verzögerungsvorrichtung vorgesehen werden.

In Fig. 5 ist schematisch eine erfindungsgemäße Ansteuereinrichtung dargestellt. Die Gegentaktstufe GS, hier eine Halbbrücke, mit dem oberen Leistungsschalter LSO und dem unteren Leistungsschalter LSU werden vom Mikrocontroller MC (bzw. einem Mikroprozessor und einem weiteren Modulator bzw. einer compare/capture unit) über eine Potentialtrennung PT angesteuert. Der Mikrocontroller MC weist drei Pulsweitenmodulationsausgänge Port P1, Port P2 und Port P3 auf. Am Port P1 steht das eigentliche Modulationssignal MS an, das einer Subtrahiereinrichtung SUB zugeführt ist. Am Ausgang P2 steht das Modulationssignal plus der Totzeit MS + TZ an, das als Ansteuerungssignal ASU den unteren Leistungsschalter LSU über die Potentialtrennung PT zugeführt ist. Am Ausgang P3 steht die Totzeit TZ an, die über einen Inverter INV als invertierte Totzeit $\overline{TZ}$ der Subtraktionseinrichtung SUB zugeführt ist. Das Differenzsignal aus dem Modulationssignal MS und der invertierten Totzeit $\overline{TZ}$ wird als Ansteuerungssignal ASO dem oberen Leistungsschalter LSO (über PT) zugeführt. Die Wirkungsweise ist anhand der Impulsdiagramme schon beschrieben. Wenn bei der erfindungsgemäßen Einrichtung das eigentliche Modulationssignal MS gleich der Totzeit TZ ist, d.h. die Modulationsbreite entspricht der Totzeit, dann hat das Ansteuerungssignal ASU des unteren Leistungsschalters LSU dauernd den Pegel 1, so daß der untere Leistungsschalter LSU dauernd ausgeschaltet ist. Solange dies der Fall ist, kann dann der obere Leistungsschalter LSO dauernd eingeschaltet sein, d.h. das obere Aussteuerungssignal kann solange einen Nullpegel aufweisen. Dies wird aufgrund der erfindungsgemäßen Ansteuereinrichtung selbsttätig ab einem bestimmten Modulationsgrenzwert erreicht.

In Fig. 6 ist eine Weiterbildung der Erfindung schematisch dargestellt, die insbesondere dann nützlich ist, wenn der Mikrocontroller selbst keine 100%ige (100 % bzw. 0 %) Modulation erreicht. Am Pulsweitenmodulationsausgang P1 ist das eigentliche Modulationssignal MS, welches der Subtrahiereinrichtung SUB zugeführt ist. Die Subtrahiereinrichtung ist im einfachsten Fall ein NAND-Glied, an dessen Ausgang das Ansteuerungssignal also für den oberen Leistungsschalter LSO der Gegentaktstufe GS ansteht. Am Ausgang P3 steht die Totzeit TZ an, die über ein NAND-Glied, das die Totzeit TZ invertiert ($\overline{TZ}$), der Subtrahiereinrichtung SUB zuführt, wie dies anhand der Fig.3 schon erläutert ist. Am Ausgang P2 ist das Modulationssignal plus der Totzeit MS plus TZ über ein NAND-Glied einem Gatter GAT, hier einem weiteren NAND-Glied zugeführt, an dessen Ausgang das Ansteuerungssignal ASU am unteren Leistungsschalter LSU ansteht. Über den Ausgang T4 wird nun in der erfindungsgemäßen Weiterbildung regelmäßig ein kurzzeitiger Impuls in Form eines Power-Bit PB abgegeben. Dieses Power-Bit PB ist hier beispielhaft dem Gatter GAT (NAND-Glied) zugeführt. Damit wird erreicht, daß bei einer nicht "hundertprozentigen" Modulation seitens des Modulators bzw. Mikrocontrollers MC die Ansteuereinrichtung im Vollblock betrieben werden kann.

Wird die erfindungsgemäße Ansteuereinrichtung als Wechselrichter für beispielsweise eine 220 Volt-Sinuswechselspannung mit 50 Hz verwendet, so wird vom Mikrocontroller MC das Power-Bit in einem Takt von 100 Hz gesetzt, so daß immer im Bereich des Maximums und des Minimums der Sinuswelle der eine Transistor voll ein- und der andere voll ausgeschaltet ist oder umgekehrt. Am Ausgang P1 des Mikrocontrollers MC ist der bereits oben erwähnte Kondensator C angeschlossen, der evtl. auftretende "Querströme" in der Gegentaktstufe verhindert, wenn eine Anstiegsflanke des Modulationssignals, z.B. das PWM-Signal des Ausgangs P1 nicht exakt zeitsynchron mit den anderen Modulationssignalen ist.

Die erfindungsgemäße Ansteuereinrichtung ist nicht auf bestimmte Mikroprozessoren oder Mikrocontroller, wie z.B. den Intel-Mikrocontroller der 196-er Serie beschränkt. Es muß nicht unbedingt ein als Pulsweitenmodulator ausgebildeter Mikrocontroller vorgesehen werden, wenn große Schaltperiodenzeiten gefordert sind. Dann ist es ausreichend, auch einfache Ausgänge des Mikrocontrollers als Pulsweitenmodulatoren zu verwenden.

**Patentansprüche**

1. Ansteuereinrichtung mit einer Gegentaktstufe (GS) mit einem als Pulsweitenmodulator ausgebildeten Mikrocontroller (MC), der mit einer bestimmten Schaltfrequenz (Modulationsrate) das Tastverhältnis (die Modulation) des Pulsweitenmodulationsausgangssignals (Modulationssignal MS) ändert und zeitverzögert die nachgeordnete Gegentaktstufe GS mit zumindest einem oberen und einem unteren Leistungsschalter (LSO, LSU) ansteuert, **dadurch gekennzeichnet**,

   daß der Mikrocontroller (MC) drei Pulsweiten-Modulationsausgänge (Port P1, P2, P3) aufweist,
   daß an einem ersten Pulsweiten-Modulationsausgang (P1) das eigentliche Pulsweitenmodulations-Ausgangssignal (MS) ausgegeben wird, wobei das Modulationssignal zum Mikrocontroller zurückgeführt ist,
   daß an einem zweiten Pulsweiten-Modulationsausgang (P2) das Modulationssignal plus einer Totzeit (MS+TZ) ausgegeben und als Ansteuerungssignal (ASU) dem unteren Leistungsschalter (LSU) zugeführt wird,
   daß an einem dritten Pulsweiten-Modulationsausgang (P3) die Totzeit (TZ) als weiteres Pulsweiten-Modulationsausgangssignal ausgegeben wird,
   und daß das Aussteuerungssignal (ASO) für den oberen Leistungsschalter (LSO) aus dem Modulationssignal (MS) und der invertierten Totzeit ($\overline{TZ}$) durch Subtraktion (SUB) gebildet ist, wobei im Modulationsgrenzbereich, d.h. die Modulation geht gegen 100 % bzw. gegen 0 %, die Totzeit (TZ) sich selbsttätig verringert und ein Leistungsschalter (LSU oder LSO) dauernd angeschaltet ist und der andere Leistungsschalter (LSO oder LSU) solange dauernd abgeschaltet ist.

2. Ansteuereinrichtung nach Anspruch 1, **dadurch gekennzeichnet**, daß ab einem bestimmten Modulationsgrenzwert vom Mikrocontroller (MC) an einem vierten Ausgang (P4) regelmäßig ein sehr kurzer Impuls (Power-Bit PB) abgegeben wird, welcher über ein Gatter (GAT) mit dem Modulationsausgangssignal (MS+TZ) des zweiten Ausgangs (P2) logisch verknüpft ist.

3. Ansteuereinrichtung nach Anspruch 2, **dadurch gekennzeichnet**, daß der kurze Impuls (PB) mit der doppelten Frequenz einer am Ausgang der Gegentaktstufe zu erzeugenden Wechselspannung gesetzt wird.

4. Ansteuereinrichtung nach einem der vorhergehenden Ansprüche, **dadurch gekennzeichnet**, daß an einem der Modulationsausgänge, z.B. am ersten Modulationsausgang (P1) eine Verzögerungseinrichtung (C) angeordnet ist.

5. Ansteuereinrichtung nach einem der vorhergehenden Ansprüche, **dadurch gekennzeichnet**, daß die benötigen Modulationswerte entweder aus einer gespeicherten Wertetabelle genommen oder in Real-time im Mikrocontroller berechnet werden.

6. Ansteuerungeinrichtung nach Anspruch 1, **dadurch gekennzeichnet**, daß die Verknüpfung der drei Pulsweitenmodulationssignale entweder extern mit Verknüpfungsgliedern oder intern im Mikrocontroller selbst erfolgt.

7. Ansteuereinrichtung nach Anspruch 1, **dadurch gekennzeichnet**, daß die Totzeit im one-line-Betrieb veränderbar ist und die Länge (Dauer) der Totzeit im Mikrocontroller in Abhängigkeit von Parametern (Halbleitertyp, Betriebsart) der Halbleiterschalter ermittelt wird, wobei interne Einflüsse (Berechnungen, Tabellen) und externe Einflüsse (Strom-, Spannungs- Durchgang, Temperatur) berücksichtigt werden.

**Claims**

1. Drive device having a push-pull stage (GS) with a microcontroller (MC), which is designed as a pulse-width modulator, varies the duty ratio (the modulation) of the pulse-width modulation output signal (modulation signal MS) at a specific switching frequency (modulation rate) and drives the downstream push-pull stage GS, with a time delay, with at least one upper power switch (LSO) and one lower power switch (LSU), characterized in that the microcontroller (MC) has three pulse-width modulation outputs (ports P1, P2, P3), in that the actual pulse-width modulation output signal (MS) is output at a first pulse-width modulation output (P1), the modulation signal being fed back to the microcontroller, in that the modulation signal plus a delay time (MS+TZ) is output at a second pulse-width modulation output (P2) and is fed as a drive signal (ASU) to the lower power switch (LSU), in that the delay time (TZ) is output as a further pulse-width modulation output signal at a third pulse-width modulation output (P3), and in that the drive signal (ASO) for the upper power switch (LSO) is formed from the modulation signal (MS) and the inverted delay time (TZ) by subtraction (SUB), the delay time (TZ) automatically being reduced in the modulation limit region, that is to say where the modulation tends to 100% or to 0%, and one power switch (LSU or LSO) being switched on continuously and the other power switch (LSO or LSU) being continuously switched off for this period.

2. Drive device according to Claim 1, characterized in that a very short pulse (power bit PB) is emitted regularly at a fourth output (P4) from the microcontroller (MC) beyond a specific modulation limit value, which very short pulse (power bit PB) is logically linked via a gate (GAT) to the modulation output signal (MS+TZ) of the second output (P2).

3. Drive device according to Claim 2, characterized in that the short pulse (PB) is set to twice the frequency of an AC voltage to be produced at the output of the push-pull stage.

4. Drive device according to one of the preceding claims, characterized in that a delay device (C) is arranged at one of the modulation outputs, for example at the first modulation output (P1).

5. Drive device according to one of the preceding claims, characterized in that the required modulation values are either taken from a stored value table or are calculated in real time in the microcontroller.

6. Drive device according to Claim 1, characterized in that the linking of the three pulse-width modulation signals is carried out either externally using logic elements or internally in the microcontroller itself.

7. Drive device according to Claim 1, characterized in that the delay time in the on-line mode is variable and the length (duration) of the delay time is determined in the microcontroller as a function of parameters (semiconductor type, operating mode) of the semiconductor switches, internal influences (calculations, tables) and external influences (current continuity, voltage continuity, temperature) being taken into account.

**Revendications**

1. Dispositif de commande comportant un étage en push-pull (GS) avec un superviseur de micro-ordinateur (MC) conçu comme un modulateur d'impulsions en largeur, qui modifie avec une fréquence de commutation déterminée (taux de modulation) le taux d'impulsions (la modulation) du signal de sortie de la modulation d'impulsions en largeur (signal de modulation MS) et commande, de manière retardée dans le temps, l'étage en push-pull GS disposé en aval avec au moins un interrupteur de puissance supérieur et un interrupteur de puissance inférieur (LSO, LSU), caractérisé en ce que le superviseur de micro-ordinateur (MC) présente trois sorties de modulation d'impulsions en largeur (Port P1, P2, P3), en ce que à une première sortie de modulation d'impulsions en largeur (P1), le signal de sortie de modulation d'impulsions en largeur (MS) effectif est extrait, le signal de modulation étant ramené au superviseur de micro-ordinateur, en ce que, à une deuxième sortie de modulation d'impulsions en largeur (P2), le signal de modulation additionné d'un temps mort (MS + TZ) est extrait et est amené en tant que signal de commande (ASU) à l'interrupteur de puissance inférieur (LSU), en ce que, à une troisième sortie de modulation d'impulsions en largeur (P3), le temps mort (TZ) est extrait comme autre signal de sortie de modulation d'impulsions en largeur, et en ce que le signal de commande (ASO) pour l'interrupteur de puissance supérieur (LSO) est formé par soustraction (SUB) à partir du signal de modulation (MS) et du temps mort inverti ($\overline{TZ}$), auquel cas dans la zone limite de modulation, c'est-à-dire celle où la modulation approche de 100 % ou de 0%, le temps mort (TZ) se réduit automatiquement et un interrupteur de puissance (LSU ou LSO) est mis sous tension de façon permanente et l'autre interrupteur de puissance (LSO ou LSU) est aussi longtemps mis hors tension de façon permanente.

2. Dispositif de commande selon la revendication 1, caractérisé en ce que à partir d'une certaine valeur limite de modulation du superviseur de micro-ordinateur (MC), une impulsion très courte (power-bit PB) est régulièrement produite à une quatrième sortie (P4), laquelle est liée de façon logique au signal de sortie de modulation (MS + TZ) de la deuxième sortie (P2) par l'intermédiaire d'une grille (GAT).

3. Dispositif de commande selon la revendication 2, caractérisé en ce que l'impulsion courte (PB) est activée avec la fréquence double d'une tension alternative à produire à la sortie de l'étage en push-pull.

4. Dispositif de commande selon l'une des revendications précédentes, caractérisé en ce que un dispositif de retardement (C) est disposé au niveau de l'une des sorties de modulation, par exemple au niveau de la première sortie de modulation (P1).

5. Dispositif de commande selon l'une des revendications précédentes, caractérisé en ce que les valeurs de modulation nécessaires sont tirées d'un tableau de valeurs mémorisé ou sont calculées en temps réel dans le superviseur de micro-ordinateur.

6. Dispositif de commande selon la revendication 1, caractérisé en ce que l'enchaînement logique des trois signaux de modulation d'impulsions en largeur se produit automatiquement soit de façon externe avec des éléments logiques ou soit de façon interne dans le superviseur de micro-ordinateur.

7. Dispositif de commande selon la revendication 1, caractérisé en ce que le temps mort peut être modifié dans un régime continu et la longueur (durée) du temps mort dans le superviseur du micro-ordinateur est déterminée en fonction de paramètres (type de semi-conducteur, mode de fonctionnement) des interrupteurs à semi-conducteur, des facteurs internes (calculs, tableaux) et des facteurs externes (passage courant-tension, température) étant pris en compte.

## FIG 1

EP 0 606 601 B1

FIG 2

9

FIG 3

# FIG 4

EP 0 606 601 B1

## FIG 5

## FIG 6